# EUROPEAN PATENT APPLICATION

(11) **EP 0 964 400 A1**
(43) Date of publication of application: **15.12.1999**
(21) Application number: 99115717.3
(22) Date of filing: 09.03.1993
(51) Int. Cl.: G11B 23/03, G11B 17/04

(54) **Removable cartridge disk drive for receiving a cartridge housing a 105MB 3.5 inch hard disk**

(30) Priority: 10.03.1992 US 850683
(62) Divisional of application: 93909178.1
(71) Applicant: IOMEGA CORPORATION, Roy, Utah 84067 (US)
(72) Inventor: Romig, Alan D., Broomfield, CO 80020 (US); Martin, Stephen R., Louisville, CO 80027 (US)
(74) Representative: Hackney, Nigel John

(57) **Abstract**

A disk drive (100) capable of receiving a cartridge (20) having a disk (42) with a diameter of about 3.5 inches which can contain at least 105 megabytes of data includes an operating mechanism (112) for initiating and controlling the positioning of an actuator arm (176) upon which is mounted a read/write transducer (178). The position of a spindle motor (224) which is used to spin up the disk (42) contained in the cartridge (20) to an operating speed, the locking of the cartridge (20) in the disk drive (100) in an operating mode and the ejection of the cartridge (20) from the drive (100). The operating mechanism (112) can function to eject the cartridge (20) whether or not the drive (100) is powered up in order to be able to remove the cartridge (20) and transport it to another disk drive (100) or to a secured location. Door opening finger means (220) are positioned to project into the cartridge receiving means to engage with the cartridge door opening means to pivot the cartridge door between a closed position and an open position.

## Description

### FIELD OF THE INVENTION

The present invention is directed to a removable cartridge disk drive capable of selectively receiving a cartridge containing a disk for storing data which disk can be accessed by the disk drive for writing data to the disk and reading data from the disk.

### BACKGROUND OF THE INVENTION

As the demand for smaller, portable and more powerful computers accelerates, less and less space can be afforded to disk memory storage. However, higher memory capacities are desired for this ever shrinking form factor. One method of accomplishing higher memory capacities is to provide for a removable cartridge disk drive such that any number of removable cartridges can be used to store as much data as is required for use with the computer. Additionally, this data can be secured in a safe location remote from the computer in order to ensure the confidentiality of the data when the computer is not in use.

In order to accommodate the ever decreasing form factor desirable for the configuration of a hard disk drive, there is a need to make both the removable cartridge and the disk drive as compact as possible yet offer a cartridge and disk drive design which can operate repeatedly and reliably in order to have the cartridge accepted into the disk drive and allow the disk drive to access data stored in the cartridge.

In such a removable cartridge disk drive, it is desirable to have as few moving parts as possible and to have these parts coordinated and synchronized in such a way that the loading and unloading of the cartridge and the accessibility of the data by a read/write head or transducer mounted in the disk drive is efficiently accomplished. It is further desirable to have the movement of the pans coordinated in such a manner that the entire operation of the disk drive can be performed with as few as possible operating levers or mechanisms for the user to be concerned with.

### SUMMARY OF THE INVENTION

The present invention is directed to a removable cartridge disk drive which can preferably receive a removable cartridge housing a disk which has a diameter of about 3.5 inches or less and which contains about 105 megabytes of data or more and meet all of the below listed objectives.

Accordingly, it is an object of the present invention to provide for a disk drive which is compact and has as few moving parts as possible, the functioning of such moving parts being coordinated by as few user manipulated levers or controls as possible.

It is an object of the present invention to provide for an operating mechanism which can control the loading and unloading of the cartridge with respect to the disk drive as well as the engagement of a spindle motor to cause the disk inside of the disk drive to spin.

Further, it is an object to provide for the operating mechanism to control the position of the read/write transducer which is located on an actuator arm. The transducer should be positioned out of the way when the cartridge is being inserted and removed, but allowed to project through an opening in the cartridge loaded in the drive in order to access data from a disk.

Further, it is an object of the present invention to have the operating mechanism control the locking of the cartridge into the disk drive and the ejection of the cartridge from the disk drive in a manner such that the read/write transducers and the disk, and the data stored on the disk are not compromised or damaged in any respect.

Additionally, it is an object of the present invention to have all of the above functions principally performed by a single operating mechanism which is convenient for the user to use and which can be performed by the user in a logically sequenced manner.

Accordingly, the present invention includes a removable cartridge disk drive for receiving a cartridge containing a disk for storing data and mounted for rotation inside of the cartridge. The disk drive includes a housing and a receiver for receiving a cartridge in the housing. Further, the disk drive includes an actuator arm mounted in the housing for moving a read/write transducer relative to a cartridge received in the receiver in order to transfer data between the transducer and the disk in the cartridge. The disk drive includes a spindle motor mounted in the housing and adapted for causing the disk to spin when the cartridge is received by the receiver. Further, the disk drive includes a device for transporting the motor between a disk engaging position and a disk non-engaging position and also a device for retracting the actuator arm to a retracted position out of the way a cartridge and for releasing the actuator to a released position so that it can be used to transfer data to and from the disk. The disk drive includes a mechanism for operating the device for transporting the motor and the device for retracting the actuator arm in order to position the motor between the engaging and non-engaging positions and to position the actuator arm between a retracted and released position.

In another aspect of the invention, the operating device is for additionally causing the ejection of the cartridge from the disk drive.

In still a further aspect of the present invention, devices are provided for locking the operating device in a position with the cartridge operably positioned in the disk drive.

In still a further aspect of the invention, all of the above operations are performed in an appropriate sequence by a single operating mechanism with a single operating lever extending therefrom. The operating mechanism includes a lever which can extend out of the housing for operating the disk drive and the operating mechanism includes a pivotally mounted arrangement having several camming and engaging surfaces, which arrangement is pivoted by the lever and which operates the disk drive in accordance with the above description in the desired sequential manner.

### BRIEF DESCRIPTION OF THE FIGURES

Figure 1 depicts a perspective view of an embodiment of the cartridge of the invention with the door in the closed position.
Figure 2 depicts a perspective view of an embodiment of the cartridge of Fig. 1 with the door in a semi-opened position, between the fully closed and fully opened position.
Figure 3 depicts a plan view of an embodiment of the cartridge of Fig. 1.
Figure 4 depicts a door end view of an embodiment of the cartridge of Fig. 1.

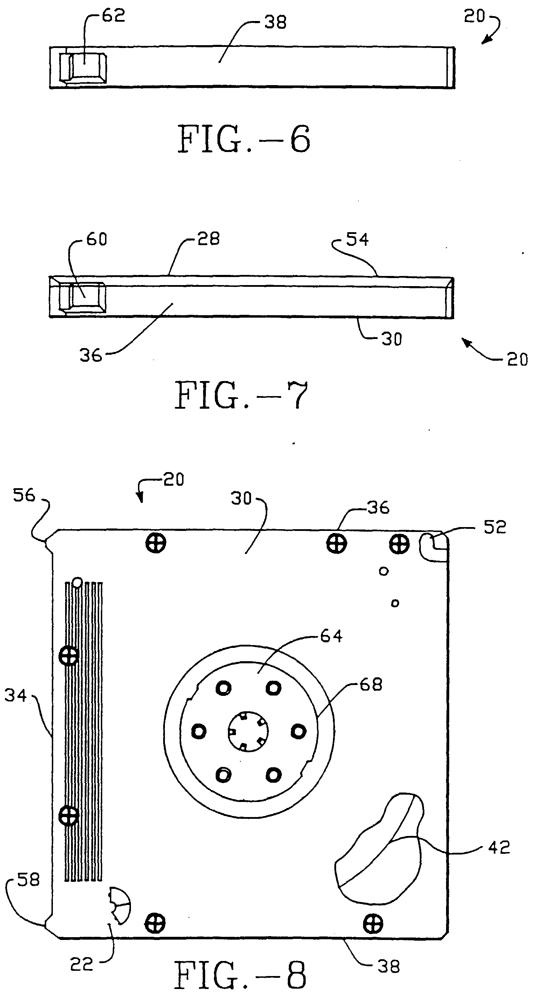

Figure 5 depicts a back end view of an embodiment of the cartridge of Fig. 1.
Figure 6 depicts a right end view of an embodiment of the cartridge of Fig. 1.

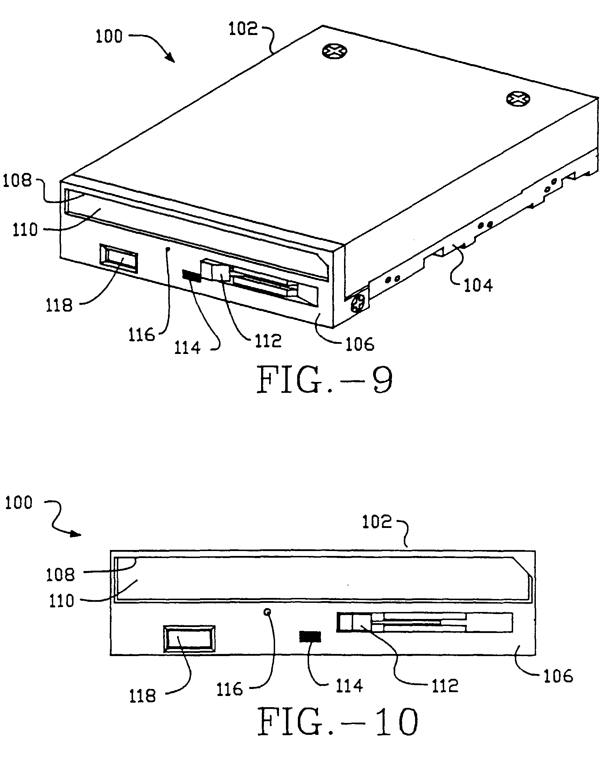

Figure 7 depicts a left end view of an embodiment of the cartridge of Fig. 1.
Figure 8 depicts a bottom plan view of the embodiment of the cartridge of the invention of Fig. 1.
Figure 9 depicts a prospective view of an embodiment of the disk drive of the invention.
Figure 10 depicts a front view of the embodiment of the disk drive of Fig. 9.
Figures 11a and 11b depict top and bottom views, respectively, of the disk drive of Fig. 9 with the housing removed and the arrangement of the disk drive positioned in a cartridge unloaded position.
Figures 12a and 12b depict top and bottom views of the disk drive of Fig. 9 with the outer housing removed and with the disk drive mechanism configured in a cartridge loaded position.
Figures 13a and 13b depict top and bottom views of the disk drive of Fig. 9 with the housing removed and with the mechanism of the disk drive configured in a motor loaded configuration.
Figures 14a and 14b depict top and bottom views of the disk drive of Fig. 9 with the outer housing removed and with the mechanism of the disk drive being urged into the beginning of the actuator arm unlocking sequence.
Figures 15a and 15b depict top and bottom views of the embodiment of the Fig. 9 with the outer housing removed and with the mechanism of the disk drive continuing in the actuator unlocking sequence with an operating lever return spring engaged for causing the operating lever to being extended from the drive when it is desired that the cartridge be ejected from the drive.
Figures 16a and 16b depict top and bottom views of the disk drive of Fig. 9 with the outer housing removed and showing the disk drive mechanism in a locked position, which is the position required in order to have the read/write transducer successfully engage the disk on a cartridge and transfer data between the transducer and the disk, with in the disk spun up to full operating speed.
Figures 17a and 17b depict plan and side views of the operating mechanism of the disk of Fig. 9 of the invention.

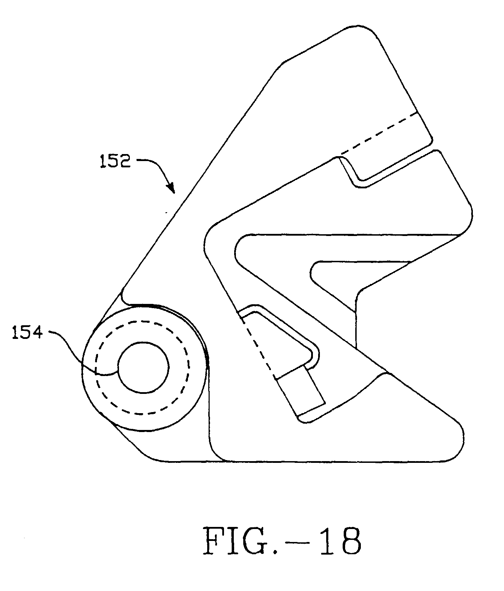

Figure 18 depicts a plan view of the retractor lever of the disk drive of the invention of Fig. 9.
Figures 19a and 19b depict plan and side views of the motor bearing plate of the invention.
Figures 20a and 20b depict plan and side views of the motor ring of the invention which in combination with the motor bearing plates of Figs. 19a and 19b allow the selective positioning of the spindle motor relative to a cartridge inserted in the disk drive of Fig. 9.
Figures 21a and 21b depict a cartridge biasing spring which fits into the cartridge receiver of the disk drive of Fig. 9 in order to assist in registering the position of the cartridge relative to the disk drive.

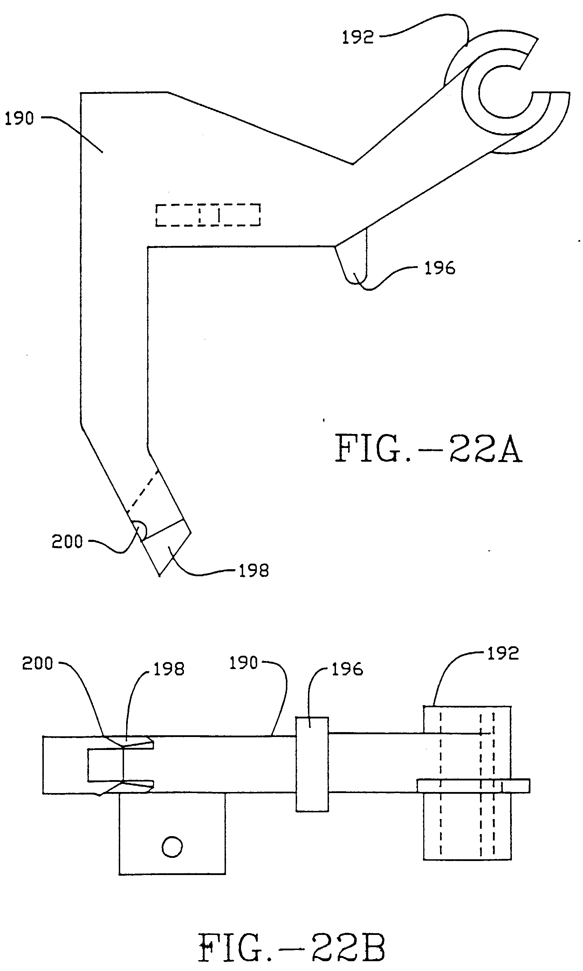

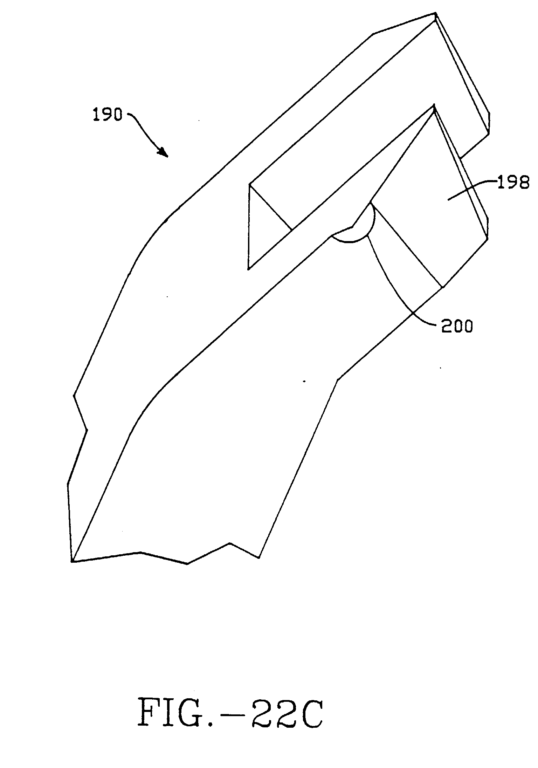

Figures 22a, 22b and 22c depict plan, side and partial prospective views of the head loading ramp of the disk drive of the invention of Fig. 9.

### DETAILED DESCRIPTION OF THE PREFERRED EMBODIMENT

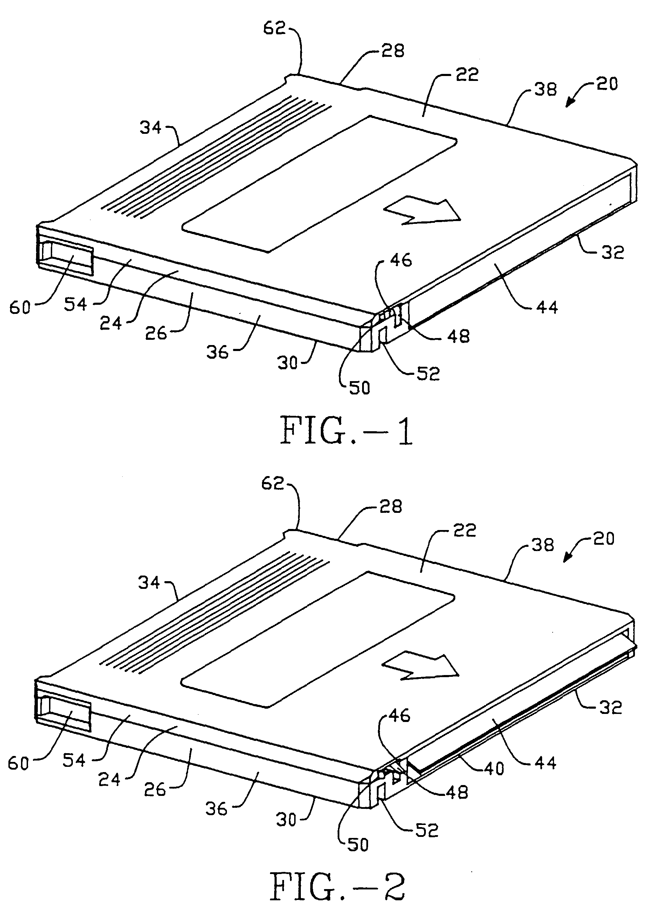

With reference to the figures and in particular, Fig. 1, a preferred embodiment of the cartridge 20 is depicted. Cartridge 20 includes an outer housing 22 which includes a top portion 24 which is secured to a bottom portion 26. In a preferred embodiment, these portions are molded out of tough and endurable engineering plastic known in the trade, such as for example, polycarbonates and Lexan. In the preferred embodiment, the top and bottom portions 24, 26 are made of 6355 polycarbonates.

The top portion 24 includes a top surface 28 and the bottom portion 26 includes a bottom surface 30. With the top and bottom portions 24, 26 secured together, the top and bottom portions 24, 26 of the housing 22 define a door or port end 32, a back end 34, and first and second connecting ends 36, 38 which connect the door end 32 with the back end 34. As can be seen in Fig. 1, the top and bottom surfaces 28, 30 are substantially parallel to each other, and a disk 42 contained in the cartridge, with the ends 32, 34, 36 and 38 essentially perpendicular to the top and bottom surfaces 28, 30.

The port end 32 defines a port 40 which provides access for read/write transducers so that these transducers can be unloaded by actuator arm onto the disk 42 contained in the cartridge 20. In a preferred embodiment, cartridge 20 includes a single disk 42 which is about 3.5 inches in diameter and can contain 105 megabytes of data on its two planar surfaces. As can be seen in Figs. 1 and 2, the cartridge door 44 is mounted adjacent the port 42 such that the door can be positioned from a closed position as shown in Fig. 1, completely closing off port 40, and therefrom move to a partially or semi-open position as shown in Fig. 2, and finally to a fully opened position.

As can be seen in Figs. 1 and 2, immediately adjacent to the left of the door 44 is an L-shaped slot 46 which allows access to a door mounting mechanism and a door locking mechanism. Immediately below the L-shaped slot 46 is, as can be seen in Figs. 1, 2 and 8, a J-shaped groove 52. The J-shaped groove 52 extends through the door end 32 and then rearwardly and outwardly. The J-shaped groove 52, as will be explained further hereinbelow, accepts a member from a disk drive in order to have the cartridge interlockingly received in the drive. Such a mechanism is contemplated in U.S. Patent Application Serial No. 07/722,837, entitled "REMOVABLE CARTRIDGE DISK DRIVE WITH AN INTERLOCKING MECHANISM FOR A DISK DRIVE" and filed June 28, 1991, which application is assigned to the present assignee of this case and is incorporated herein by reference. Adjacent to the location of the L-shaped slot 46 and opposite the J-groove 52 and defined through the top surface 28 and the first end 36 is a beveled portion 54 which extends the length of the first end 36. This beveled portion 54 is compatible with a slanted portion of the disk drive door opening which receives the cartridge in order to ensure that the cartridge is inserted into the drive in the proper orientation and that the cartridge is properly registered in the drive so that the heads can be unloaded onto the disk.

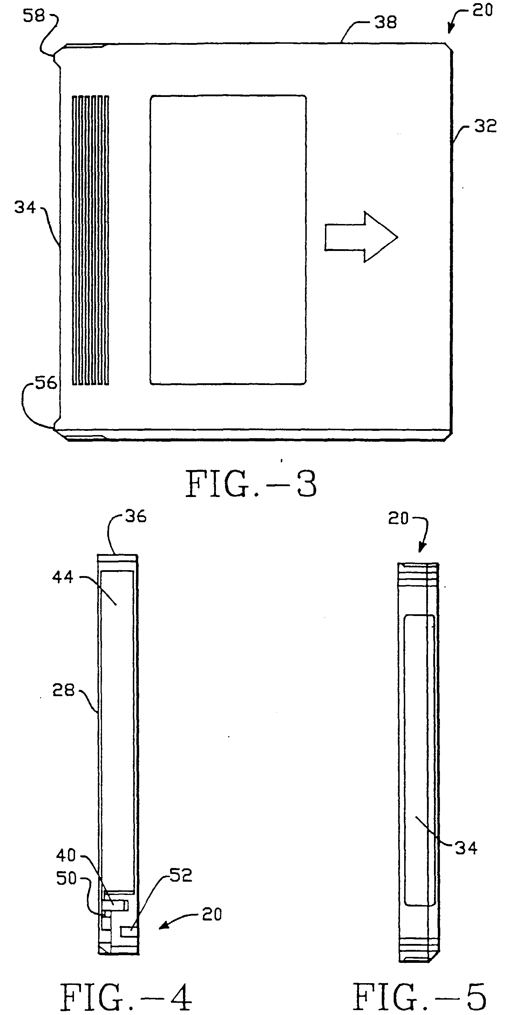

As can be seen in Figs. 1, 2, 3 and 8 cartridge 20 includes tabs 56, 58 which extend from the back end 34 of the housing 22. These tabs 56, 58 ensure that the length of the cartridge 20 from the door end 32 to the back end 34 is longer than the width of the cartridge 20 which is defined as the distance between the first and second ends 36, 38 in order to ensure that the cartridge cannot be inserted sideways into the drive.

The housing 22 further defines first and second recesses 60, 62 which can be used to grab the cartridge with either human or mechanical fingers in order to select the cartridges from a library and insert the cartridge into the drive.

The design of the cartridge 20 has been accomplished in order to maximize the size of the port 40 and to advantageously position the door 42 in the door open position so that the actuator arm and heads of the disk drive will have maximum exposure to the disk contained in the cartridge 20. To this end, the door 44 was designed to be received substantially above and in the plane parallel to the disk 42. Further, the door is received in the open position substantially within the housing 22 of the cartridge 20. Thus, this design does not add to the overall length of the cartridge with the door in the open position and accordingly, reduces the length of the cartridge receiver in the drive. With the door received in the cartridge, the pivot point, which is fixed to the drive, of the actuator arm can be positioned closer to the center of the rotation of the disk. This provides for a compact design and optimizes the performance of the head with respect to the tracks on the disk. The reason for this is that with a rotary actuator arm the angle with respect to which the head addresses the various tracks is more consistently tangential across the range of tracks and further the geometry of the actuator arm in relationship to the disk causes the heads to fly above the disk in a more consistent and constant flying height with increased accuracy for the read/write operation of the head. Further with the door fully received in the open position in the cartridge, there is less possibility that damage can be done to the door as it is being received in the disk drive. This arrangement in part accounts for the ability to store at least 105 megabytes of data on a disk which is about 3.5 inches in diameter or less.

Further, in order to maximize the port 40, the L-shaped slot 46, through which access can be obtained to the door mounting mechanism and door locking mechanism, is located to the left of the door port 40. Immediately adjacent to the slot 46 is the bevel 54, and immediately therebelow through the bottom surface 30 is defined the J-shaped groove 52. With the L-shaped slot 46, the bevel 54, and the J-shaped groove 52 so positioned, the door 44 can extend rightwardly therefrom substantially the full length of the door end 32, to immediately adjacent the connecting side 38. With the bevel 54 extending through the top surface 28 opposite to the J-groove 52, the cartridge can be positively registered in the receiver of the drive with a member from the drive engaging and lockingly being received in the J-groove 52 and with the bevel 54 mating to a mating beveled surface in the cartridge receiver of the drive.

As can be seen in Fig. 8, the cartridge 20 includes a hub 64 to which the disk is mounted. Mounted onto hub 64 is an armature plate 65 which contacts the spindle motor of the disk drive. A portion of the hub 64 and the armature plate 65 is received through a port 66 defined in the bottom surface 30 of the housing 22. Disposed in the hub 64 are a plurality of five downwardly depending teeth 68 which are urged apart as they are received over a spindle hub as is known in the trade.

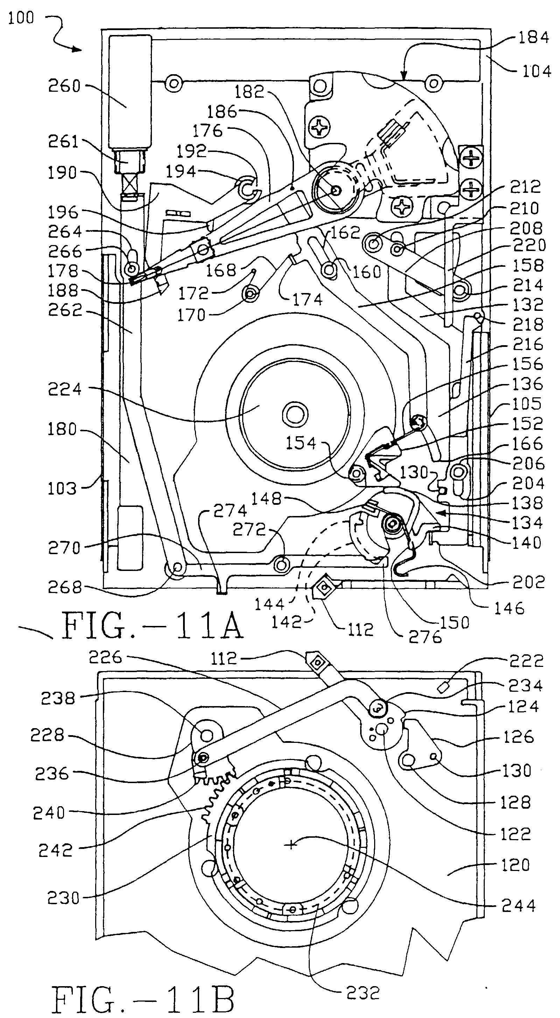

Figure 9 depicts a perspective view of an embodiment of the disk drive 100 of the invention. Disk drive 100 includes an outer housing 102 which is mounted on a baseplate 104. The disk drive 100 further includes a front panel or bezel 106 which has a cartridge receiver opening 108 through which the cartridge of Fig. 1 is received and a door 110 which closes the cartridge receiver opening. Through the front panel 106 extends an operating lever 112 which can be positioned through a multiple of positions in order to operate the drive 100. Also on the front plate 106 is an indicator light 114 and an emergency access port 116 and a shut off power button 118.

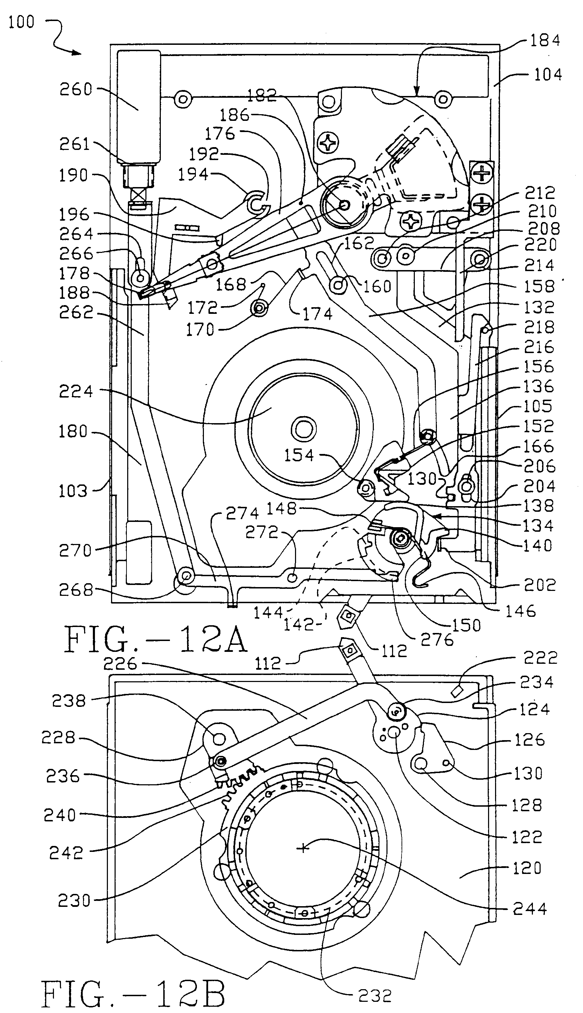

Figures 11a and 11b depict the top and bottom views of the disk drive of Fig. 9 with the outer housing 102 removed. Figures 11a and 11b show the disk drive 100 in the cartridge unloaded mode as the disk drive 100 would appear prior to the insertion of a cartridge into the disk drive 100. As shown in Figs. 11a and 11b, the operating lever 112 is in an initial reference position which is designated as a reference position of 0°. The operating lever is pivotally mounted to the bottom side 120 of the baseplate 104 and at pivot point 122 and includes shoulder 124 which be engaged by an actuator lock lever 126 in order to lock the position of the operating lever 112 in the position shown in Figs. 11a and 11b. The actuating lock lever 126 is pivotable about pivot point 128 and includes a pin 130 which extends through the baseplate 104 to engage a cartridge link 132. As will be explained more fully hereinbelow, as the cartridge links 132 move with the insertion of the cartridge into the disk drive 100, the pin 130 moves resulting in the rotation of the actuator lock lever 126 out of the way of the shoulder 124 such that the operating lever 112 can extend further out from the housing by about 18° from the reference position in Figs. 11a and 11b to the position in Figs. 12a and 12b.

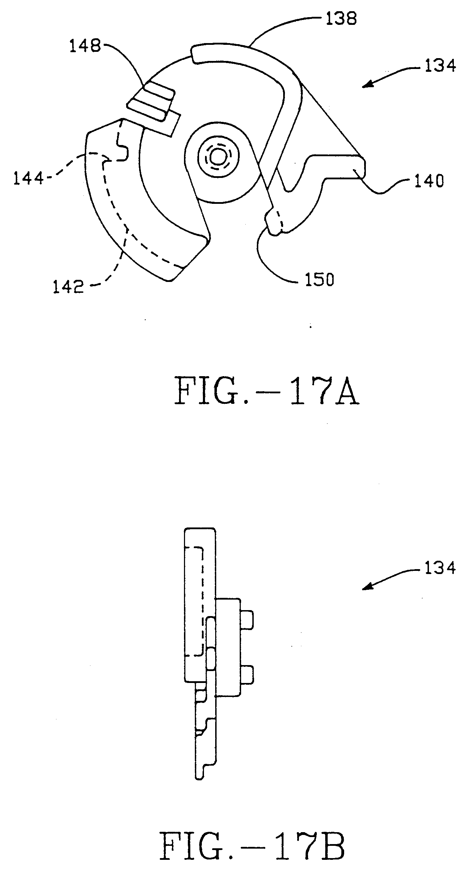

Secured to the operating lever 112 and pivotable about pivot point 128 is an actuating or operator lever cam arrangement 134. This actuating or operator lever cam arrangement 134 is positioned relative to the top side 136 of the baseplate 104. This cam arrangement 134 pivots the same amount as does the operating lever 112. The actuating or operating cam lever arrangement 134 which is shown in greater detail in Figs. 17a and 17b includes a retractor lever camming surface 138, a cartridge link engagement projection 140, a locking cam surface 142 and a locking shoulder 144. Disposed about the pivot point 122 is an actuator or operating lever return spring 146. This return spring 146 is secured in grooves 148 and 150 of the operating lever cam arrangement 134. This return spring 146 is used to engage the cartridge link 132 as can be seen in subsequent figures and as described hereinbelow is used to extend the operating lever 112 out from the disk drive 100 in preparation for the ejection of the cartridge 20 from the housing 100.

An actuator arm retractor lever 152 is pinned for rotation at pin 154. Retractor lever 152 engages and rides on retractor lever camming surface 138, such that retractor lever 152 is urged to pivot about pin 154. Contained in grooves in the actuator arm retractor lever 152, is a retractor spring 156. Retractor spring 156 operably connects the retractor lever 152 to a retractor link 158. Retractor link 158 is positioned to move relative to the top side 136 of the baseplate 104, but is constrained by a pin 160 extending from top side 136 which projects through slot 162 of the retractor link 158. Additionally, a pin 164 which is downwardly dependent from the retractor link 158 extends through a slot 166 in the baseplate 104. The retractor link 158 is biased toward the retractor lever 152 by a spring 168 which is coiled about pin 170 and secured at point 172. Spring 168 engages retractor link 158 at tab 174. As depicted in Fig. 11a, the retractor link 158 holds the actuator arm 176 in a rearward retracted position so that the actuator arm 176 and the read/write transducer 178 mounted thereon is out of the way of and not damaged by the introduction of a cartridge 20 into the receiving compartment 180 of the disk drive 100. It is to be understood that two transducers are preferably mounted on actuator arm 176 in order to transfer data to the upper and lower surface of the disk 42, but for simplicity only the upper transducer is shown in the figures.

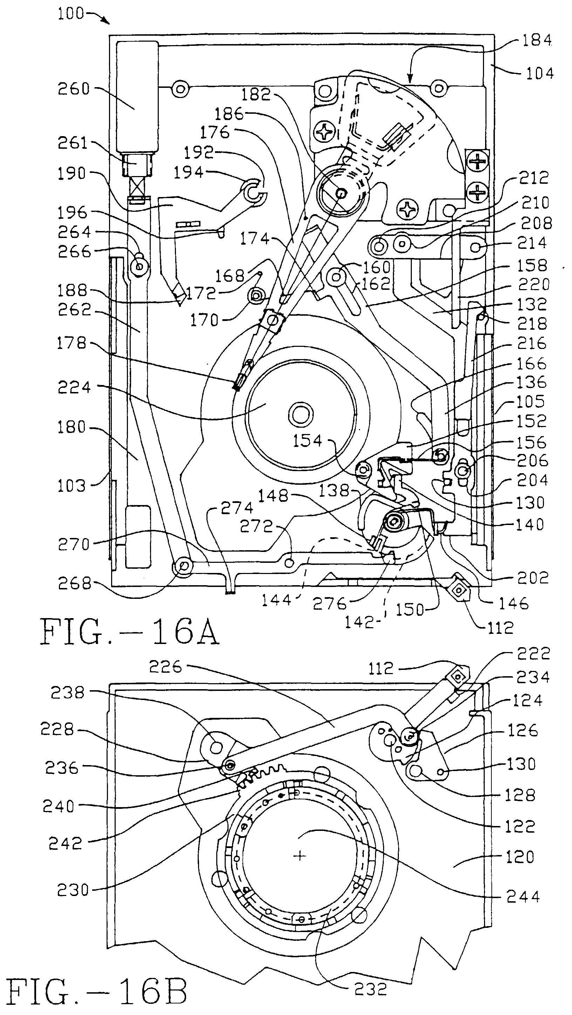

The actuator arm 176 is mounted for rotation at pivot point 182 and is pivoted by voice coil motor 184. The retractor link 158 engages the actuator arm 176 by means of a pin 186 which is downwardly dependent from the actuator arm 176. As can be seen in the sequence of the next figures, through the rotation of the operating lever cam arrangement 134, the retractor lever 152 and the retractor link 158 allow the actuator arm 176 to move from the retracted position, shown in Fig. 11a, to the release position, shown in Fig. 16a, so that the read/write transducer can transfer data between the head and the disk contained in the cartridge. As will be more fully discussed hereinbelow, the actuator arm 176 just rearwardly of the read/write transducer 178 rests on a ramp 188 located at the end of ramp arm 190. Ramp arm 190 is mounted for pivotal rotation at pivot point 192 and is biased by a spring 194 to rotate in a counterclockwise direction in order to assist the delivery of the read/write transducer 178 to a disk contained in a cartridge. The actuator arm 176 can engage a tab 196 extending from the ramp arm 190 in order to urge the ramp arm 190 rearwardly as the actuator arm 176 is urged rearwardly to a retracted position by the retractor link 158. In the position shown in Fig. 11a, the actuator arm 176 adjacent to the read/write transducer 178 has moved up a ramp surface 188 and is held behind a detent or bump 200 in back of the ramp surface 188 in the retracted position shown in Fig. 11a. Alternatively, the actuator can be held in a recess or reverse sloping ramp behind ramp 188.

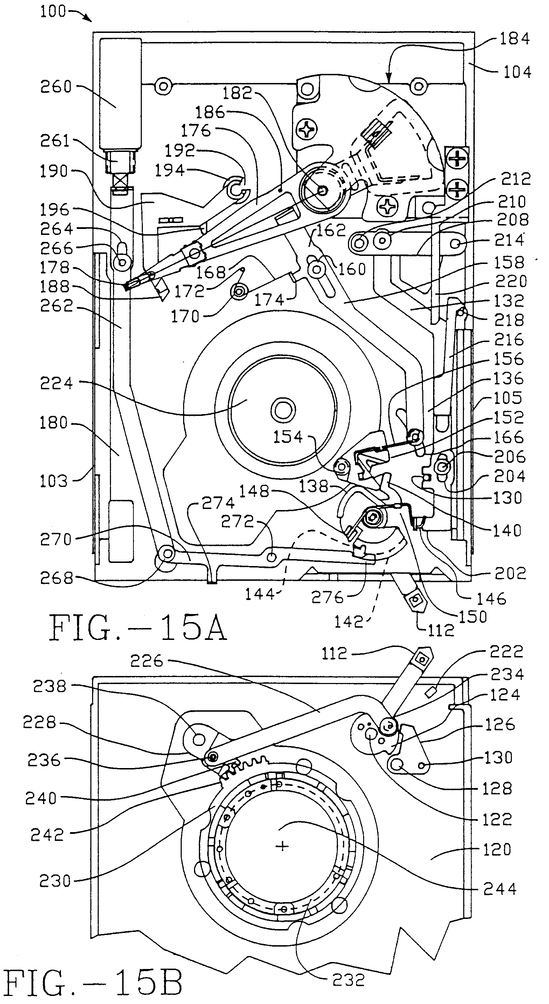

The principal purpose for the detent 200 located on the ramp arm 190 is to prevent the unloading of the transducers from the ramp when the ramp and the actuator arm are in the release position shown in Fig. 15a and preparatory to the voice coil motor actually moving the transducer into an operating relationship with the disk. In all other positions, the ramp and the actuator arm are held back in the retracted position by the retractor arm 158.

As described above, the operating lever cam arrangement 134 includes a cartridge link engagement projection 140 which engages the cartridge link 132 at tab 202. Cartridge link 132 includes a slot 204 through which a pin 206 secures the cartridge link 132 to the baseplate 104 for motion relative thereto. Secured at the upper end of the cartridge link 132 is a cartridge lever 208. Cartridge 208 is pivotally mounted on the cartridge link 132 at pivot point 210. In addition, cartridge lever 208 is pivotally mounted to the baseplate 104 at pivot point 212. Upstanding from the distal end of the cartridge lever 208 is a cartridge engaging pin 214. This pin can engage the J-shaped groove 52 in the cartridge shown in Fig. 8.

Secured to the cartridge link 132 is a detent lever 216. The detent lever 216 can be positioned on either side of detent pin 218 in order to secure the position of cartridge engaging pin 214 and cartridge lever 208 from the cartridge release or rejection position of Fig. 11a to the cartridge locking or retention position of Fig. 12a.

As more fully disclosed in the above referenced co-pending patent application, a cartridge door opening finger 220 is secured to the baseplate 104 and serves to open the cartridge door as the cartridge is inserted into the drive 100.

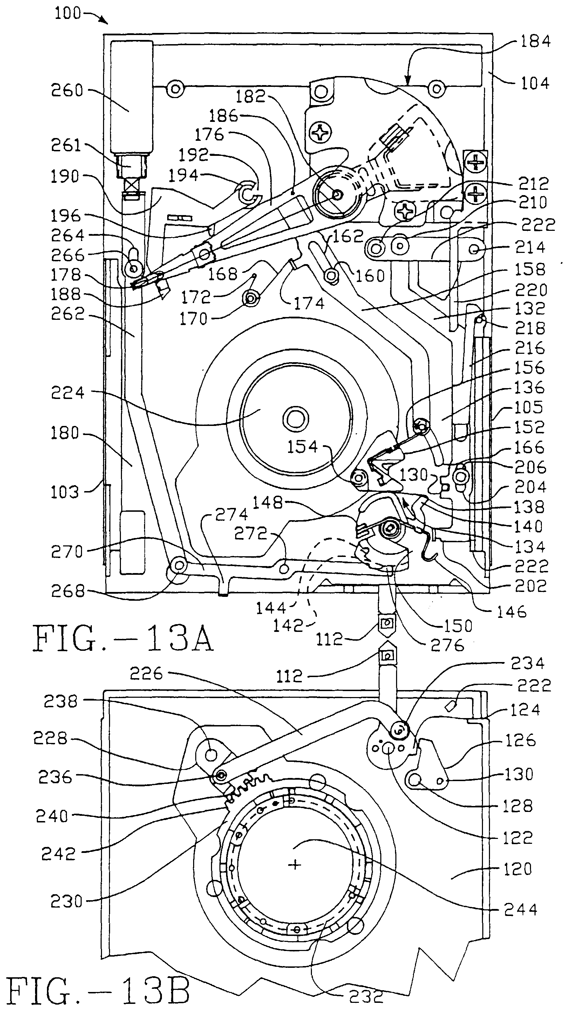

In a preferred embodiment, the spindle motor 124, which serves to bring the disk contained in the cartridge up to full rotational speed can be translated from a position shown in Fig. 11b to the position shown in Figs. 13b through 16b where the motor has been translated into a motor engagement position with respect to the cartridge of the disk drive. The spindle motor 224 is translated through a motor link 226, a motor gear 228, a motor ring 230 and a motor bearing plate 232.

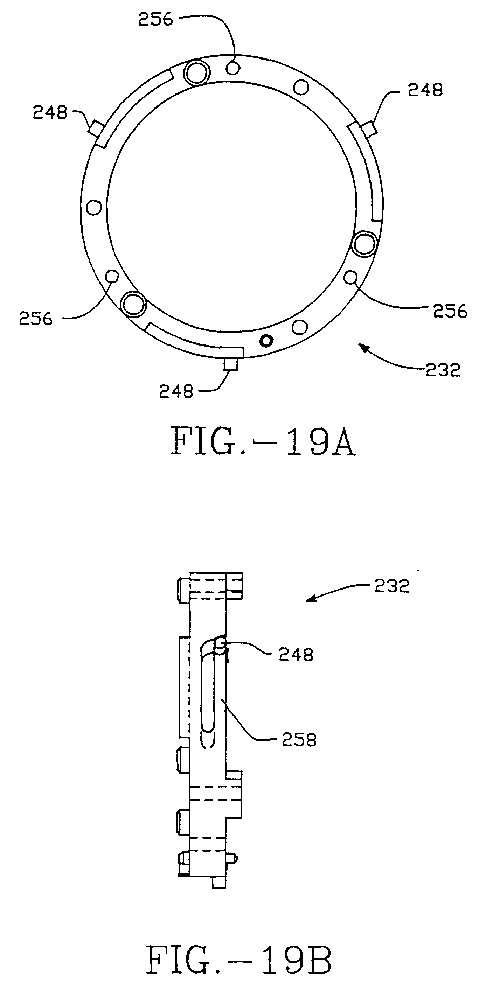

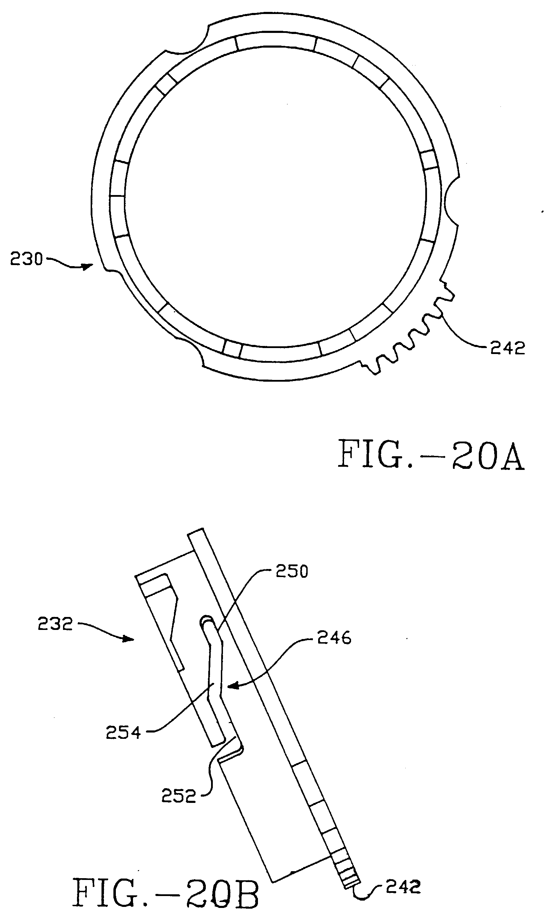

The motor ring 230 is more fully disclosed in Figs. 20a and 20b. The motor bearing plate 232 is more fully disclosed in Figs. 19a and 19b.

The motor link 226, as shown in Fig. 11a, is substantially J-shaped and pivotally pinned to operating lever 112 at pivot point 234 and pivotally pinned to motor gear 228 at pivot point 236. Motor gear 228 is itself pivotally pinned to the baseplate 104 at pivot 238. Movement of the operating arm 112 causes the motor gear 228 to pivot about pivot point 238. Motor gear 228 includes a set of teeth 240 which engage and mesh with a set of teeth 242 extending from the motor ring 230. Accordingly, movement of the operating lever 112 causes the motor ring 230 to rotate about axis 244. As can be seen in Fig. 20b, motor ring 230 includes a Z-shaped slot 246. The motor bearing plate 232 in Figs. 19a and 19b includes, in a preferred embodiment, three pins 248 which engage three Z-shaped slots, such as slot 246 in Fig. 20b. The spindle motor 244 is secured to the motor bearing plate 232 and the motor bearing plate 232 can translate along with the spindle motor 224 upwardly and downwardly perpendicular to the plane of Figs. 11a, 11b, in order to cause the spindle motor 224 to load against the baseplate 104 and to engage the fingers of the cartridge positioned in the disk drive 100. This translational motion is afforded by the movement of the pins 248 in the slots 246 between the flat surfaces 250 and 252 as connected by the ramp 254. The motor bearing plate 232 includes bores 256 which allow the motor bearing plate 232 to be pinned to the baseplate 104 so that the motor bearing plate 230 can be translated by the operating lever 112 relative to the baseplate 104 as the bores 256 slide relative to the pins secured to the baseplate 104. As can be seen in Fig. 19b, the pins 248 are positioned at the end of a elongated load beam or springs 258. This allows the motor to be fully loaded against the baseplate 104 and the fingers of the cartridge, accounting for any variations so that the cartridge is properly seated onto the spindle motor 224.

Additionally positioned in the disk drive 100 is a solenoid 260 which is used to lock the position of the operating lever cam arrangement 134 and thus the operating lever 112 in the full operating position as shown in Figs. 16a, 16b. The solenoid 260 is engaged with an elongated solenoid link 262. A spring 261 urges solenoid link 262 away from the housing of solenoid 260 with the plunger of solenoid 260 pulling the solenoid link 262 toward the housing of solenoid 260 and against spring 261. Solenoid link 262 includes a slot 264 through which a pin 266 is disposed. Pin 266 is secured to the baseplate 104 such that the solenoid link 262 can be translated through the motion of the solenoid 260 past the pin 266. Solenoid link 262 is pivotally secured at pivot point 268 to a solenoid lock arm 270 which is itself pivotally pinned to the baseplate 104 at pivot point 272. Between the points 268 and 272 on the solenoid lock arm 270, is an emergency release tab 274 which can be urged rearwardly through the insertion of a pin through port 116 (Fig. 9).

At the other end of the solenoid lock arm 270 is a lock tab 276 which can engage the locking shoulder 144 of the operating lever cam arrangement 134 as shown in Fig. 16a. In order to disengage the locking tab 274 from the arrangement 134 when there is a power failure to the drive, a pin is inserted through port 116 in order to urge to the solenoid locking arm 270 rearwardly pivoting at about pivot point 272, urging the locking tab 276 out of engagement with the shoulder 144 so that the operating lever 112 can be urged out of the drive by return spring 146 to the position shown in Fig. 15a in order to allow the cartridge to be manually ejected from the disk drive 110 should there be a power failure. Thus, the cartridge can be ejected using lever 112 without damage to the disk, the data on the disks or the heads.

Figs. 12a and 12b show the mechanisms of the drive 100 in the cartridge loaded position. In these figures, the cartridge is not included in order to highlight the mechanisms of the disk drive 100. As can be seen in Figs. 12a and 12b, the operating lever 112 has been urged out of the recess in the front 106 of drive 100 to a position which is about 18° from the positions of Figs. 11a, 11b. This is the result of the J-shaped groove 52 (Fig. 8) of the cartridge 20 engaging the upstanding pin 214 of the cartridge lever 208 and urging pin 24 rearwardly to the position shown in Fig. 12a. As this occurs, the cartridge link 132 is urged rearwardly resulting in the pin 130 causing the actuator lock lever 126 (Fig. 11b) to pivot so that the lever 126 comes out of engagement with the shoulder 124 of the operating lever 112 allowing the operating lever 112 to rotate. The rotation of the operating lever 112 to the position shown in Figs. 12a, 12b is caused by the tab 202 of the cartridge link 132 engaging the cartridge link engagement projection 140 of the operating lever cam arrangement 134.

As can be seen in Fig. 12a, with the insertion of the cartridge, the detent lever 216 being somewhat flexible, has been repositioned to the other side of detent pin 218 in order to assist in holding and locking the cartridge in the drive.

Turning to Figs. 13a, 13b, the operating lever is then manually urged to the position shown in Figs. 13a and 13b by the user. The position of the operating lever 112 is approximately 45° from the position shown in Figs. 11a, 11b. In this position, the motor has been translated upwardly against and to engagement with the baseplate 104 and the cartridge in order to properly seat the spindle motor with respect to the disk. At this point, the pins 248 projecting from the motor bearing plate 230 have traversed the ramp 254 and rests in the appropriate flat surfaces 250 of the Z-shaped groove 246.

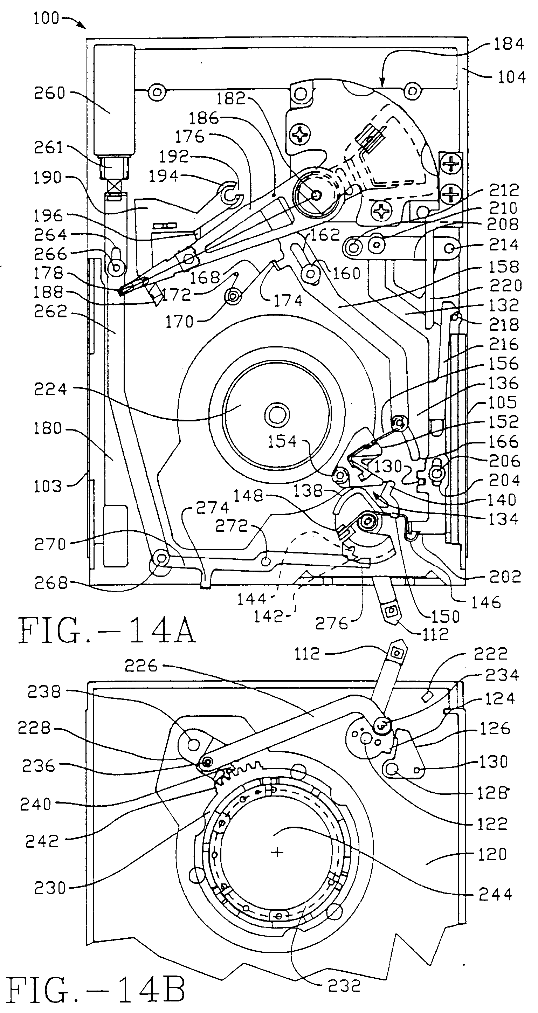

Next, the operating lever 112 is moved to the position shown in Figs. 14a, 14b which is approximately 65° from the position shown in Figs. 11a, 11b. In this position, the actuator arm 176 is in the process of being released from the retractive position. As can be seen in Fig. 14a, the ramp arm 190 has pivoted in a counterclockwise manner approximately 8° in order to position the actuator arm and the read/write transducer more closely to the disk preparatory to unloading the transducer onto the disk.

Turning to Figs. 15a and 15b, the operating lever 112 is then moved to the position shown which is about 75° from the position of Figs. 11a, 11b. In this position, the cartridge link 132 is moved almost to its forward most position so that the actuator arm is released. Further, the return spring 146 begins to engage the tab 202 of the cartridge link 132 in order to begin to bias the operating lever cam arrangement 134. From this position, the lever is urged by the user to the position of Figs. 16a, 16b which is about 90° from the position of Figs. 11a, 11b. In this position, the cartridge and drive 100 are fully locked in the operating position with the actuator arm able to fully access the disk in the cartridge. Further lever 112 contacts switch 222 in order to power up the spindle motor and drive logic so that read/write functions can begin. It is noted that during the motion of the operating lever 112 from the positions of Figs 13a, 13b to the position of Figs. 16a, 16b, that while the motor ring and the motor bearing plate move relative to each other caused by the motion of the operating lever, that the motor is not further loaded toward the baseplate as the pin of the motor bearing plate rides in the flat surface 250 shown in the motor ring 230. In the position of Figs. 16a, 16b, the lock tab 276 of the solenoid lock arm 270 has been droped into locking engagement with the shoulder 144 of the arrangement 134 locking the arrangement in position with the return spring 146 fully loaded against the tab 202 of the cartridge link 132. The solenoid lock arm 270 is urged into this position due to the pressure placed on the solenoid link 262 by the solenoid spring 261.

After the appropriate read/write operations have been completed with respect to the cartridge, the process of ejection the cartridge from the drive 100 begins with the solenoid 260 unlocking the solenoid lock arm 270 from the operating lever cam arrangement 134 with the return spring 146 urging the operating lever 112 out of the drive 100 to the position shown in Figs. 15a, 15b. This occurs when the operator pushes button 118 causing the solenoid to retract the solenoid link against the solenoid spring. From this position the user moves the operating lever 112 sequentially from the position shown in Figs. 15a, 15b to the position in Figs. 11a, 11b in order to first urge the actuator arm to a rearward retracted position with the actuator arm pushing against the tab 196 and the transducers resting on the ramp 188, with the motor unloaded, and finally with the cartridge ejected by the motion of the pin 214 from the position shown in Fig. 12a to the position shown in Fig. 11a.

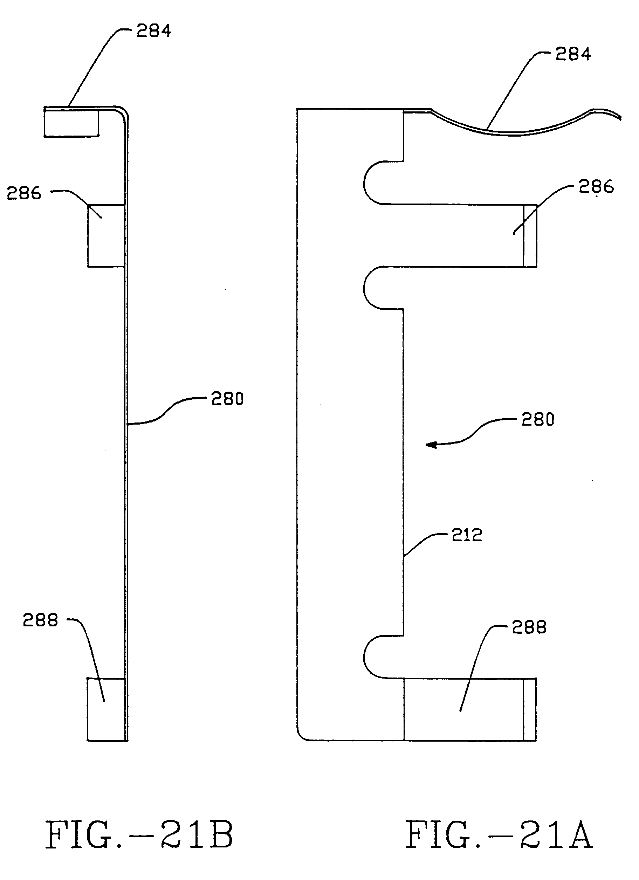

In a preferred embodiment, in order to hold the cartridge in position in the disk drive, the disk drive includes a cartridge bias spring 280 which is shown in Figs. 21a and 21b. This bias spring 280 is placed with the elongate portion of the spring 282 disposed in the drive substantially parallel to the front 106 but set back from the front door 110. The spring 280 includes leaf springs 284, 286, 288. Leaf springs 286 and 288 contact the upper surface of the cartridge as the cartridge is inserted into the drive in order to press it downwardly toward the spindle motor. Leaf spring 284 which is disposed adjacent the left side 103 of the housing, urges the cartridge toward the right side 105 of the housing further assisting in the engagement of the upstanding pin 214 with the J-groove of the cartridge.

The operation of a disk drive is as follows. In order to start the disk drive, the cartridge is inserted into the disk drive in order to release the operating lever 112. As the operating lever 112 is urged by the user through the position shown from Figs. 12a to 16a, the spindle motor engages the disk in the cartridge. With operating lever 112 engaging switch 222, the spindle motor causes the disk to come up to operating rotational speed, and the actuator arm is released by the mechanism so that the voice coil motor can unload the actuator arm from the ramp onto the disk. In order to stop the process, the logic off button 118 is pushed. Then read/write functions cease and the voice coil motor returns the transducer to the retracted position loaded onto the ramp arm 190. The spindle motor spins down and then the lever 112 projects out of the drive to the position shown in Fig. 15a. The operating lever 112 can then be used to cause the retractor link to urge the actuator arm 176 and thus the ramp arm 190 into the rearward retracted position. After this has occurred, the spindle motor is unloaded from the baseplate and the cartridge is rejected as the lever is moved to the position of Figs. 11a, 11b. It is noted that should there be a power failure, that the through the use of the port 116, that the operating lever cam arrangement 134 can be unlocked and that the various above linkage, such as the actuator arm retractor linkage, can move the read/write transducer out of the way of the disk without the influence of a voice coil motor so that the cartridge can be removed from the disk drive without damage to the transducers, the disk or the data stored on the disk.

### Industrial Applicability

The operation of the disk drive 100 is in accordance with that which has been described hereinabove. From this description it is noted that the disk drive 100 provides for a compact and streamlined drive which can operate to successfully accept and operably engage a disk in a cartridge in order to transfer data between a transducer and the disk. Further, whether there is power to the disk drive or not, the disk drive can successfully cause the transducers to be removed from operable engagement with the disk so that there is no damage to the transducer or the disk and then have the cartridge ejected from the disk drive so that the cartridge can be transported to a desired location or secured in a safe manner should the data on the disk be confidential.

From the above, it further can be seen that this operation is efficiently handled through the use of a single operating lever 112 which coordinates all of the functions as described above.

Other aspects and objects of the invention can be obtained from a review of the appended figures and claims.

It is to be understood that other embodiments of the present invention can be fabricated and be within the spirit and scope of the appended claims.

## Claims

1. A removable cartridge disk drive for receiving a cartridge, the cartridge comprising a cartridge shell including a cartridge door, a disk for storing data and mounted for rotation inside the cartridge shell, and a cartridge door opening means to rotate the cartridge door between a closed position and an open position, the disk drive comprising:
a housing;
cartridge receiving means to receive the cartridge;
actuator arm means mounted in the housing for moving a read/write transducer relative to the cartridge received in the receiving means in order to transfer data between the transducer and the disk inside of the cartridge;
motor means mounted in the housing and adapted for causing the disk to spin when the cartridge is received by the receiving means;
means for retracting the actuator arm means to a retracted position out of the way of a cartridge and for releasing the actuator means to a released position;
door opening finger means positioned to project into the cartridge receiving means to engage with the cartridge door opening means to pivot the cartridge door between a closed position and an open position.

2. The drive of claim 1, including:
means for ejecting a cartridge which has been received in the receiving means; and means for operating said actuator arm means between a retracted position and a released position;
said operating means for additionally causing the ejecting means to eject a cartridge from receiving means of said disk drive.

3. The drive of claim 1, including:
means for locking a cartridge in said receiving means, which is movable between a cartridge locked position and a cartridge unlocked position; and
means for operating said actuator arm means between a retracted position and a released position;
said operating means including means for locking said locking means in the cartridge locked position.

4. The drive of claim 3, including:
said locking means includes a detent which is movable between a cartridge locked position and a cartridge unlocked position as a cartridge is received in the cartridge receiving means.

5. The drive of claim 1, including:
means for operating said actuator arm means between a retracted position and a released position;
said operating means including a retractor cam and means for positioning said cam; and
said retracting means has a retractor link, means for operable engaging said retractor link with said retractor cam and with said actuator arm means for retracting and releasing said actuator arm means responsive to the position of said retractor cam.

6. The drive of claim 2, including:
said ejecting means including means for engaging the cartridge as the cartridge is inserted into the cartridge receiving means;
said operating means including an operating lever means which is movable between retracted and extended positions; and
said ejecting means including means for operably engaging said operating means as the cartridge is inserted into the cartridge receiving means and for causing said operating lever to move from a retracted position to an extended position so that the operating lever can operate the actuator arm means retracting means.

7. The drive of claim 2, including:
an operating means lock for locking said operating means in a locked position;
means for mounting said operating means lock so that the operating means lock can be moved between an operating means locked position and an operating means unlocked position; and
said ejecting means including means for urging said operating means lock from the locked to the unlocked position as a cartridge is inserted into the cartridge receiving means.

8. The drive of claim 2, including:
said ejecting means includes a locking means for locking the ejecting means and the cartridge in a cartridge locked position in the cartridge receiving means.

9. The drive of claim 2, including:
said ejecting means including means adapted for engaging the cartridge and locking the cartridge in the cartridge receiving means.

10. The drive of claim 9, including:
said means adapted for engaging the cartridge including a pin which is adapted to be engaged in a groove defined in the cartridge in order to lock the cartridge in the cartridge receiving means.

11. The drive of claim 1, including:
means for ejecting the cartridge which has been received in the receiving means.

12. The drive of claim 1, including:
means for locking the cartridge in the receiving means, which is movable between a cartridge locked position and a cartridge unlocked position.

13. The drive of claim 12, including:
said locking means includes a detent which is movable between a cartridge locked position and a cartridge unlocked position as the cartridge is received in the cartridge receiving means.

14. The drive of claim 11, including:
said ejecting means includes a locking means for locking the ejecting means and the cartridge in a cartridge locked position in the cartridge receiving means.

15. The drive of claim 11, including:
said ejecting means including means adapted for engaging the cartridge and locking the cartridge in the cartridge receiving means.

16. The drive of claim 15, including:
said means adapted for engaging the cartridge including a pin which is adapted to be engaged in a groove defined in the cartridge in order to lock a cartridge in the cartridge receiving means.
